# EUROPEAN PATENT APPLICATION

(11) **EP 2 083 362 A1**
(43) Date of publication of application: **29.07.2009**
(21) Application number: 08001363.4
(22) Date of filing: 24.01.2008
(51) Int. Cl.: G06F 17/30

(54) **Related reliability method for searching patents results**

(71) Applicant: Sunonwealth Electric Machine Industry Co., Ltd., Kaohsiung City (TW)
(72) Inventor: Horng, Alex, Ling Ya District Kaohsiung City (TW); Huang, Chung-Jen, Ling Ya District Kaohsiung City (TW)
(74) Representative: Kador & Partner

(57) **Abstract**

A technical classification method for searching patents includes the steps of: entering a technical term to conduct a user-defined search, and to obtain a set of patents of search results; classifying the patents according to codes of a patent classification system, so as to build a plurality of patent classification groups of the patents; and generating the patent classification groups depending on the classified patents. Furthermore, the technical classification method further includes the step of comparing the percentage distributions of the patents with a predetermined threshold value.

## Description

### BACKGROUND OF THE INVENTION

### 1. Field of the Invention

The present invention relates to a related reliability method for searching patents results. More particularly, the present invention relates to the technical classification method employing codes of a patent classification system (e.g. International Patent Classification, IPC) to classify patents of search results, so as to build a plurality of patent classification groups of the patents of search results.

### 2. Description of the Related Art

Currently, a patent search tool (e.g. patent database) provided in many official patent offices has applied a client/server model which can be searched by entering a key word (i.e. user's search term) such as a key word of title, a filing date, a patented date or an applicant name via connecting a user to a server. Accordingly, the user's search can be conducted and at least one patent document of search results may be generated. The patent document may include a patent publication document, a patent specification, a patent brief form or other related papers for reference.

After conducting a patent search, the user can generally study the entire patent documents of search results via the patent database system. In addition to this, there is a need for the user to review these patent documents for analyzing a new trend of technical research, evaluating patent infringements or product marketing in the related art via such useful information of patents. The user such as a policy maker can also decide the strategy of research and evaluate the potential value of marketing according to such useful information of patents.

It is a common practice that the user can enter a piece of information or search term to conduct a user-defined search for patents. The user-defined information can determine the scope of search results. The user can thus receive a number of patents of search results, including some other unrelated patents only if they match for the user's search term. Although such a searching method can be successful in obtaining a set of patent documents of the search results, there possibly exist some other unwanted patents of search results.

With regard to the problematic aspects naturally occurring during searching the patents of search results, the unwanted patents of the search results can lower the reliability of the search performance. The selection of the user's search term may likely determine the possibility of accuracy matching for the user-defined search. An inappropriate user's search term may result in a set of unmatched patents of search results. For example, when an inexperienced user enters an inappropriate search term of "motor" for conducting a search for DC brushless motors in the related art of heat-dissipation fans, the search results may include a number of patents which pertain to the unrelated technical fields of AC motors, sensing motors and three-phase motors.

Accordingly, the user must completely review each patent document of the search results and further reexamine his search term used in the previous patent search whether the unwanted patents exist in the search results. The user must redetermine another appropriate search term if there are some unwanted patents existing in the search results. Another problem with reviewing each of the patent documents of search results is due to the fact that there exist a number of unrelated patents of search results. However, repeatedly reviewing each patent document is a waste of searching time or labor cost. Hence, there is a need for improving such a manual review method for the search results in the past.

As is described in greater detail below, the present invention intends to provide a technical classification method for searching patents. The technical classification method utilizes codes of a patent classification system (e.g. International Patent Classification, IPC) to classify patents of search results, so as to build a plurality of patent classification groups of the patents of search results. The technical classification method further generates percentage distributions of patents as well as concentration ratios of patents in the patent classification groups so that the user can easily and rapidly review the patent classification groups. This method is successful in saving user-reviewing time and generating percentage distributions of the patent classification groups in such a way as to mitigate and overcome the above problem.

### SUMMARY OF THE INVENTION

The primary objective of this invention is to provide a related reliability method for searching patents results which utilizes codes of a patent classification system (e.g. International Patent Classification, IPC) to classify patents of search results in a patent-searching operation, so as to build a plurality of patent classification groups of the patents of search results. Accordingly, this method is successful in saving user-reviewing time and increasing the reliability of search results.

The secondary objective of this invention is to provide the related reliability method for searching patents results which further generates percentage distributions of the patent classification groups of the search results during the patent-searching operation. Accordingly, this method is successful in enhancing the patent-searching operation.

Another objective of this invention is to provide the related reliability method for searching patents results which utilizes a computer device to execute the steps, and a database system to store classification data of the search results. Accordingly, the technical classification method is in the form of computer-aid classification method.

The related reliability method for searching patents results in accordance with an aspect of the present invention includes the steps of: entering a technical term to determine a user-defined search, and to obtain a set of patents of search results; classifying the patents according to codes of a patent classification system, so as to build a plurality of patent classification groups of the patents; and generating the patent classification groups depending on the classified patents.

In a separate aspect of the present invention, the method further includes the step of comparing the percentage distributions of the patents with a predetermined threshold value.

Further scope of the applicability of the present invention will become apparent from the detailed description given hereinafter. However, it should be understood that the detailed description and specific examples, while indicating preferred embodiments of the invention, are given by way of illustration only, since various will become apparent to those skilled in the art from this detailed description.

### BRIEF DESCRIPTION OF THE DRAWINGS

The present invention will become more fully understood from the detailed description given hereinbelow and the accompanying drawings which are given by way of illustration only, and thus are not limitative of the present invention, and wherein:
FIG 1 is a flow chart of a related reliability method for searching patents results for searching patents in accordance with a preferred embodiment of the present invention;
FIG. 2 is a schematic view of the related reliability method for searching patents results in accordance with the preferred embodiment of the present invention, with executing the first step of searching and counting patents;
FIG. 3 is a schematic view of a series of classification groups of classified patents generated in executing the first and second steps of the related reliability method for searching patents results in accordance with the preferred embodiment of the present invention;
FIG. 4 is a schematic view of the related reliability method for searching patents results in accordance with the preferred embodiment of the present invention, with executing the third and fourth steps to generate percentages of classified patents in the classification groups;
FIG. 5 is a schematic view, similar that of to FIG 2, of the related reliability method for searching patents results in accordance with the preferred embodiment of the present invention, with executing the first step of searching and counting patents;
FIG 6 is another schematic view, similar to that of FIG. 3, of a series of classification groups of classified patents generated in executing the first and second steps of the related reliability method for searching patents results in accordance with the preferred embodiment of the present invention; and
FIG 7 is another schematic view of the related reliability method for searching patents results in accordance with the preferred embodiment of the present invention, with executing the third and fourth steps to generate percentages of classified patents in the classification groups.

### DETAILED DESCRIPTION OF THE INVENTION

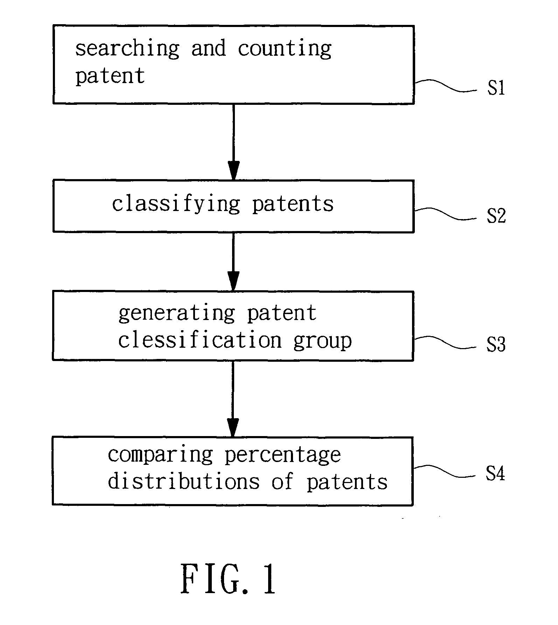

Referring now to FIG 1, a technical classification method for searching patents in accordance with a preferred embodiment of the present invention includes the steps of: searching and counting patents designated as step "S1"; classifying patents designated as step "S2"; generating patent classification groups designated as step "S3"; calculating and comparing percentage distributions of patents designated as step "S4". In step "S1", a user can enter a technical term or a desired keyword (i.e. a piece of undocumented or unstructured information) to determine a user-defined search, and to count patents of search results. In step "S2", the patents of the search results are classified according to a patent classification system (e.g. International Patent Classification, IPC), so as to build patent classification groups. In step "S3", generating the patent classification groups depending on the classified patents. In step "S4", percentage distributions of the patents are calculated and compared with a predetermined threshold.

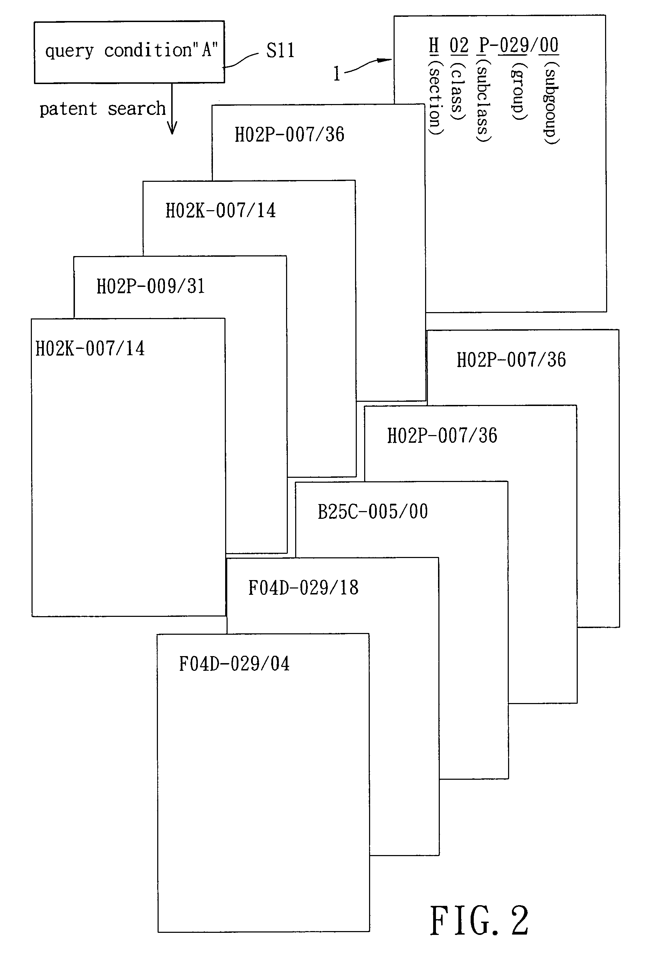

Turning now to FIGS. 1 and 2, the technical classification method in accordance with the preferred embodiment of the present invention is implemented by executing the first step "S1" of searching and counting patents. A user can enter a query condition of technical terms (identified as "A"), as indicated in the block "S11" in FIG. 2. For example, the query condition can be selected from keywords of titles, objections, technical functions, technical features and technical problems of patents. By way of example, the user can preferably link a computer device or the like to a patent database system which may be provided in a web page of patent offices, so as to obtain search results of patent documents 1 matching the user-defined search. The patent document 1 listed in the search results includes codes of IPC or other patent classifications. The number of the patent documents 1 is counted during the patent search. For instance, the number of the patent documents 1 obtained from this patent search is designated numeral 10.

Turning now to FIGS. 1 through 3, the technical classification method in accordance with the preferred embodiment of the present invention is implemented by further executing the second step "S2" of classifying patents. In step "S2", the patent documents 1 of the search results are classified according to codes of IPC or other patent classification systems. By way of example, the IPC is utilized to classify the patent documents 1 of the search results, and is a common classification for various patents issued or published in different countries. The IPC is a hierarchical system in which the whole area of technology is divided into a range of "sections", "classes", "subclasses", "groups" and "subgroups". Each section (i.e. first class) is subdivided into classes (i.e. second class); each class comprises one or more subclasses (i.e. third class); and each subclass is broken down into subdivisions referred to as groups (i.e. fourth class) and subgroups (i.e. fifth class). The IPC is published and managed by the World Intellectual Property Organization (WIPO), and the detailed descriptions for symbols and titles of sections, classes, subclasses, groups and subgroups of IPC are omitted for the sake of simplicity.

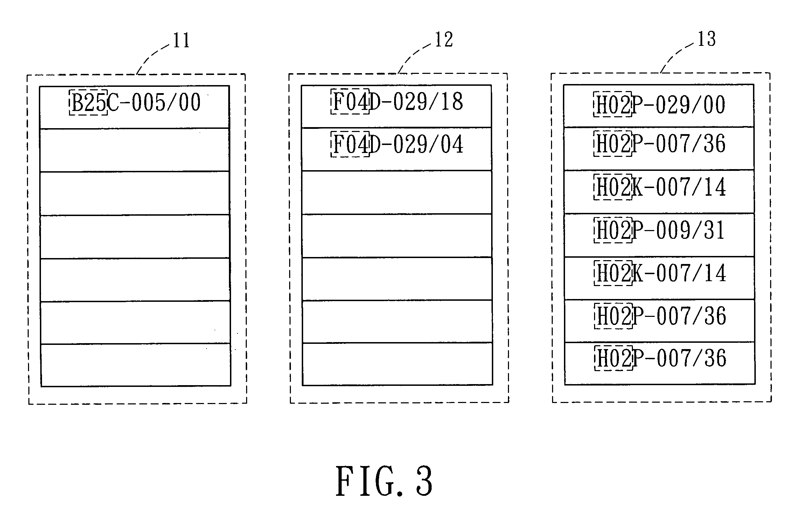

With continued reference to FIGS. 2 and 3, in step "S2" codes of "sections" and "classes" of IPC are selected to classify the patent documents 1. In an alternative embodiment, codes of one of "subclasses", "groups" and "subgroups" are further used to compare the patent documents 1 in the following step. In this preferred embodiment, the patent documents 1 assigned with identical codes of "sections" and "classes" of IPC are grouped into a single classification group. Accordingly, the classified patent documents 1 are used to generate a first classification group 11, a second classification group 12 and a third classification group 13 after executing the step "S2", as best shown in FIG 3.

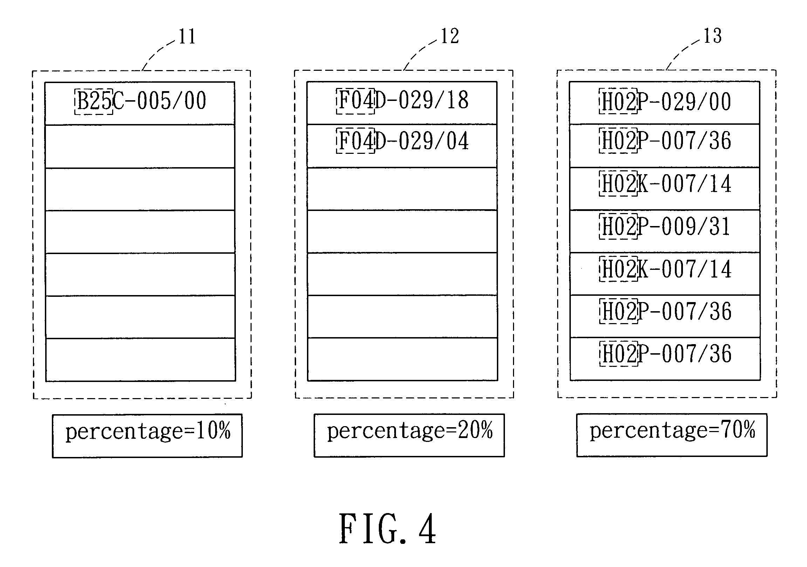

Turning now to FIGS. 1 and 4, the technical classification method in accordance with the preferred embodiment of the present invention is implemented by further executing the third step "S3" of generating the patent classification groups depending on the classified patents. The user can employ the computer device to group the classified patent documents 1 in the first classification group 11, the second classification group 12 and the third classification group 13. For example, the number of the patent documents 1 pertaining to the first classification group 11, the second classification group 12 and the third classification group 13 are 1, 2 and 7 respectively, and assigned to numerals 1, 2 and 7 respectively. The total number of the patent documents 1 classified in step "S2" is 10.

Still referring to FIGS. 1 and 4, the technical classification method in accordance with the preferred embodiment of the present invention is implemented by further executing the fourth step "S4" of calculating and comparing percentage distributions of patents. The percentage distributions of the first classification group 11, the second classification group 12 and the third classification group 13 are depending on the number of the patent documents 1 assigned therein. In FIG 4, the percentage distributions shown in the first classification group 11, the second classification group 12 and the third classification group 13 are 10%, 20% and 70% respectively. It will be understood that the percentage distributions of the patent documents 1 may serve as concentration ratios of patents in the search results.

In step "S4", values of the percentage of the classification groups represent a degree of reliability of the patent search. The patent documents 1 of search results are reliable if the percentage of the classification group is not less than a high-level value, 80% for example. The query condition "A" is appropriate if at least one patent classification group has the percentage of the classified patent documents 1 not less than a predetermined threshold value, 50% for example. It will be understood that the user's search term is appropriate if there is at least one patent classification group having the percentage of the classified patent documents 1 not less than a predetermined threshold value. In this preferred embodiment, the percentage of the third classification group is greater than 50% such that the query condition "A" is appropriate and reliable.

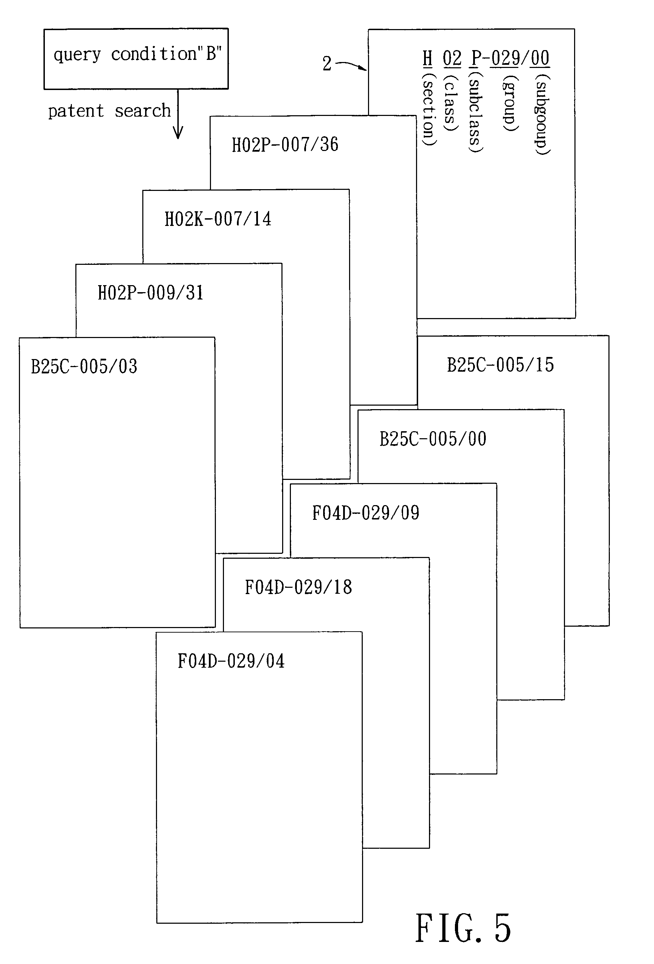

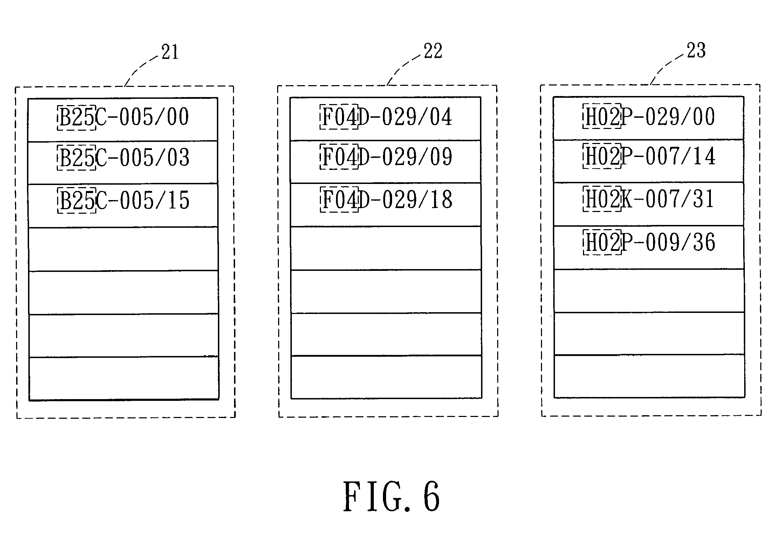

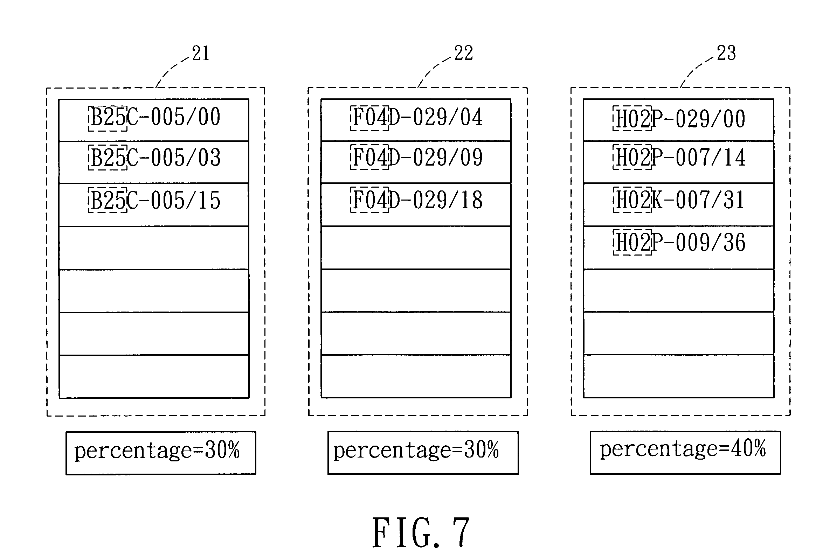

Turning now to FIGS. 5 through 7, by way of example, another query condition (identified as "B") is used to execute the steps "S1", "S2", "S3" and "S4" for another patent search. The number of the patent documents 2 obtained from this patent search is designated numeral 10. The patent documents 2 of the search results are classified according to codes of the IPC. The patent documents 2 assigned with identical codes of "sections" and "classes" of IPC are grouped into a single classification group, so as to generate a first classification group 21, a second classification group 22 and a third classification group 23, as best shown in FIG. 6. The number of the patent documents 2 pertaining to the first classification group 21, the second classification group 22 and the third classification group 23 are 3, 3 and 4 respectively, and assigned to numerals 3, 3 and 4 respectively. In FIG. 6, the percentage distributions of the first classification group 21, the second classification group 22 and the third classification group 23 are 30%, 30% and 40% respectively. The query condition "B" is inappropriate due to the fact that there is no patent classification group having the percentage of the classified patent documents 2 greater than a predetermined threshold value of 50%. Consequently, the query condition "B" may be inappropriate and unreliable. Accordingly, an appropriate technical term for searching patents may be required.

Referring back to FIGS. 1 and 2, the steps of the technical classification method in accordance with the present invention can be manually or automatically implemented by a computer device (not shown) which connects with a patent database (not shown). The computer device can retrieve codes of IPC applied in the patent documents 1 so as to build the classification groups, and to calculate the percentage distributions of patents of search results. The computer device can compare each of values of the classification groups with a predetermined threshold value. Accordingly, using the computer device can further speed up the processing time of the technical classification method. In the illustrated embodiment, the query condition "A" applied in patent search is appropriate and is recorded in the patent database for reference.

As has been discussed above, the conventional searching method requires the user to enter keywords or pieces of information of predetermined technical terms, and reviewing each of the patent documents of the search results for matching the user-defined search. Alternatively, the user requires selecting another keyword to further search the patents. Conversely, the technical classification method for searching patents in accordance with the present invention includes the step "S2" of classifying patents according to codes of the patent classification system (e.g. IPC), and the step "S3" of generating patent classification groups. Furthermore, the technical classification method of the present invention includes the step "S4" of calculating and comparing percentage distributions of the patents of the search results. Accordingly, the technical classification method of the present invention can be conducted so as to simplify the process of patent search and save the processing time.

Although the invention has been described in detail with reference to its presently preferred embodiment, it will be understood by one of ordinary skill in the art that various modifications can be made without departing from the spirit and the scope of the invention, as set forth in the appended claims.

## Claims

1. A related reliability method for searching patents results , comprising the steps of:
entering a technical term to conduct a patent search, and to obtain a set of patents of search results;
classifying the patents according to codes of a patent classification system, so as to build a plurality of patent classification groups of the patents depending on the classified patents; and
comparing percentage distributions of the patents with a predetermined threshold value.

2. The related reliability method for searching patents results as defined in claim 1, wherein the threshold value is 50%.

3. The related reliability method for searching patents results as defined in claim 1, wherein a computer device is used to execute the steps.

4. The related reliability method for searching patents results as defined in claim 3, wherein the computer device links to a patent database system so as to store data of the classified patents.

5. The related reliability method for searching patents results as defined in claim 1, wherein the codes of the patent classification system are in the form of IPC such that the patents assigned with identical codes of sections and classes of IPC are grouped into a single classification group.

6. The related reliability method for searching patents results as defined in claim 1, wherein the codes of the patent classification system are in the form of IPC such that the patents assigned with identical codes of sections, classes and subclasses of IPC are grouped into a single classification group.

7. The related reliability method for searching patents results as defined in claim 1, wherein the codes of the patent classification system are in the form of IPC such that the patents assigned with identical codes of sections, classes, subclasses and groups of IPC are grouped into a single classification group.

8. The related reliability method for searching patents results as defined in claim 1, wherein the codes of the patent classification system are in the form of IPC such that the patents assigned with identical codes of sections, classes, subclasses, groups and subgroups of IPC are grouped into a single classification group.

9. The related reliability method for searching patents results as defined in claim 1, wherein the technical term is selected from the group consisting of titles, objections, technical functions, technical features and technical problems of the patents.

10. A related reliability method for searching patents results, comprising the steps of:
entering a technical term to conduct a patent search, and to obtain a set of patents of search results;
classifying the patents according to codes of a patent classification system, so as to build a plurality of patent classification groups of the patents; and
generating the patent classification groups depending on the classified patents.

11. The related reliability method for searching patents results as defined in claim 10, wherein the threshold value is 50%.

12. The related reliability method for searching patents results as defined in claim 10, wherein a computer device is used to execute the steps.

13. The related reliability method for searching patents results as defined in claim 12, wherein the computer device links to a patent database system so as to store data of the classified patents.

14. The related reliability method for searching patents results as defined in claim 10, wherein the codes of the patent classification system are in the form of IPC such that the patents assigned with identical codes of sections and classes of IPC are grouped into a single classification group.

15. The related reliability method for searching patents results as defined in claim 10, wherein the codes of the patent classification system are in the form of IPC such that the patents assigned with identical codes of sections, classes and subclasses of IPC are grouped into a single classification group.

16. The related reliability method for searching patents results as defined in claim 10, wherein the codes of the patent classification system are in the form of IPC such that the patents assigned with identical codes of sections, classes, subclasses and groups of IPC are grouped into a single classification group.

17. The related reliability method for searching patents results as defined in claim 10, wherein the codes of the patent classification system are in the form of IPC such that the patents assigned with identical codes of sections, classes, subclasses, groups and subgroups of IPC are grouped into a single classification group.

18. The related reliability method for searching patents results as defined in claim 10, wherein the technical term is selected from the group consisting of titles, objections, technical functions, technical features and technical problems of the patents.

## Amended claims

### Amended claims in accordance with Rule 137(2) EPC.

**1.** A related reliability method for searching patents results , comprising the steps of:
entering a technical term to conduct a patent search, and to obtain a set of patents of search results;
classifying the patents according to codes of a patent classification system, so as to build a plurality of patent classification groups of the patents depending on the classified patents; and
comparing percentage distributions of the patents with a predetermined threshold value of 50%.

**2.** The related reliability method for searching patents results as defined in claim 1, wherein a computer device is used to execute the steps.

**3.** The related reliability method for searching patents results as defined in claim 3, wherein the computer device links to a patent database system so as to store data of the classified patents.

**4.** The related reliability method for searching patents results as defined in claim 1, wherein the codes of the patent classification system are in the form of IPC such that the patents assigned with identical codes of sections and classes of IPC are grouped into a single classification group.

**5.** The related reliability method for searching patents results as defined in claim 1, wherein the codes of the patent classification system are in the form of IPC such that the patents assigned with identical codes of sections, classes and subclasses of IPC are grouped into a single classification group.

**6.** The related reliability method for searching patents results as defined in claim 1, wherein the codes of the patent classification system are in the form of IPC such that the patents assigned with identical codes of sections, classes, subclasses and groups of IPC are grouped into a single classification group.

**7.** The related reliability method for searching patents results as defined in claim 1, wherein the codes of the patent classification system are in the form of IPC such that the patents assigned with identical codes of sections, classes, subclasses, groups and subgroups of IPC are grouped into a single classification group.

**8.** The related reliability method for searching patents results as defined in claim 1, wherein the technical term is selected from the group consisting of titles, objections, technical functions, technical features and technical problems of the patents.

**9.** A related reliability method for searching patents results, comprising the steps of:
entering a technical term to conduct a patent search, and to obtain a set of patents of search results;
classifying the patents according to codes of a patent classification system, so as to build a plurality of patent classification groups of the patents; and
generating the patent classification groups depending on the classified patents.

**10.** The related reliability method for searching patents results as defined in claim 10, wherein the threshold value is 50%.

**11.** The related reliability method for searching patents results as defined in claim 10, wherein a computer device is used to execute the steps.

**12.** The related reliability method for searching patents results as defined in claim 12, wherein the computer device links to a patent database system so as to store data of the classified patents.

**13.** The related reliability method for searching patents results as defined in claim 10, wherein the codes of the patent classification system are in the form of IPC such that the patents assigned with identical codes of sections and classes of IPC are grouped into a single classification group.

**14.** The related reliability method for searching patents results as defined in claim 10, wherein the codes of the patent classification system are in the form of IPC such that the patents assigned with identical codes of sections, classes and subclasses of IPC are grouped into a single classification group.

**15.** The related reliability method for searching patents results as defined in claim 10, wherein the codes of the patent classification system are in the form of IPC such that the patents assigned with identical codes of sections, classes, subclasses and groups of IPC are grouped into a single classification group.

**16.** The related reliability method for searching patents results as defined in claim 10, wherein the codes of the patent classification system are in the form of IPC such that the patents assigned with identical codes of sections, classes, subclasses, groups and subgroups of IPC are grouped into a single classification group.

**17.** The related reliability method for searching patents results as defined in claim 10, wherein the technical term is selected from the group consisting of titles, objections, technical functions, technical features and technical problems of the patents.
